# FASCICULE DE BREVET EUROPEEN

(11) **EP 3 209 837 B1**
(45) Date de publication et mention de la délivrance du brevet: **14.03.2018**
(21) Numéro de dépôt: 15793874.7
(22) Date de dépôt: 20.10.2015
(51) Int. Cl.: E04H 4/16, H02G 9/12, H01R 39/64, H01R 13/56, H01R 33/90, B63B 22/00

(54) **CÂBLE D'ALIMENTATION POUR UN ROBOT DE NETTOYAGE DE PISCINE**
STROMKABEL FÜR EINEN SCHWIMMBECKENREINIGUNGSROBOTER
POWER CABLE FOR A POOL-CLEANING ROBOT

(30) Priorité: 23.10.2014 FR 1460188
(43) Date de publication de la demande: 30.08.2017
(73) Titulaire: Zodiac Pool Care Europe, 75009 Paris (FR)
(72) Inventeur: FAVIE, Louis, F-31470 Colomiers (FR); DELOCHE, Rémi, F-31000 Toulouse (FR)
(74) Mandataire: Ipside
(86) Numéro de dépôt international: PCT/FR2015/052804
(87) Numéro de publication internationale: WO 2016/062957

(56) Documents cités:
- AU-A1- 2008 202 422
- FR-A1- 2 870 281
- US-A1- 2002 166 804
- US-A1- 2014 273 541

## Description

### DOMAINE TECHNIQUE

Le domaine de l'invention est le domaine des accessoires pour piscines. Plus précisément, l'invention concerne un câble d'alimentation pour un robot de nettoyage de piscine.

### ÉTAT DE LA TECHNIQUE

Dans le domaine des piscines, il existe notamment des robots qui permettent de nettoyer des surfaces de piscines. Ces robots sont immergés dans les piscines.

Actuellement, le robot est commandé par un dispositif de commande non immergé dans la piscine. Afin d'alimenter le robot en énergie électrique, le dispositif de commande est relié au robot par un câble d'alimentation.

Le robot est dirigé pour nettoyer les surfaces de la piscine comme une surface inférieure et des surfaces latérales. Le robot est donc amené à réaliser de nombreux déplacements dans la piscine.

Les nombreux déplacements du robot comprennent des rotations du robot sur lui-même ainsi que des trajectoires circulaires dans la piscine qui provoquent des emmêlements et/ou des torsions du câble d'alimentation.

Lorsque le câble d'alimentation présente des torsions, le câble d'alimentation présente une longueur diminuée ce qui ne lui permet plus de couvrir la même surface de piscine que lorsque ledit câble d'alimentation ne comporte pas de torsions.

De plus, ces torsions et emmêlements augmentent très fortement l'usure du câble d'alimentation.

Enfin, lorsque le câble d'alimentation présente des emmêlements, le démêlage du câble d'alimentation est obligatoirement réalisé manuellement ce qui nécessite la présence d'un utilisateur pour sortir le robot de la piscine et pour le mettre en position d'arrêt.

La demande de brevet n° US 2014/0273541 divulgue un câble d'alimentation pour un robot de nettoyage de piscine comportant un connecteur tournant et un flotteur supportant le connecteur tournant ledit flotteur étant disposé sur le câble d'alimentation entre le connecteur tournant et un skimmer flottant.

La demande de brevet n° US 2002/0166804 divulgue également un câble d'alimentation électrique pour un robot de nettoyage de piscine, ledit câble comprenant plusieurs connecteurs tournants connectés à des flotteurs afin de maintenir le câble d'alimentation soit en suspension lorsque le robot se déplace au fond de la piscine, soit à proximité de la surface d'eau de la piscine lorsque le robot se déplace en surface.

### EXPOSÉ DE L'INVENTION

La présente invention a pour objectif de remédier à tout ou partie des inconvénients de l'art antérieur, notamment ceux exposés ci-avant, en proposant une solution qui permette de très fortement limiter la création de torsions et d'emmêlements d'un câble d'alimentation.

A cet effet, il est proposé par la présente invention, un câble d'alimentation pour un robot de nettoyage de piscine. Ledit câble d'alimentation comporte un connecteur tournant et un moyen de flottaison supportant ledit connecteur tournant. Ledit connecteur tournant est adapté à permettre une rotation dudit câble d'alimentation autour de son axe longitudinal. De manière avantageuse, le câble d'alimentation objet de l'invention est utilisable sous une couverture d'une piscine telle que par exemple une bâche de piscine.

Ainsi, grâce au moyen de flottaison, le connecteur tournant qui est relié audit moyen de flottaison, est situé sensiblement au niveau de la ligne d'eau. On entend par ligne d'eau, le niveau de l'eau. Le fait de positionner le connecteur tournant en ligne de d'eau et non en profondeur, permet d'empêcher le connecteur tournant de passer sous le câble d'alimentation et de provoquer des emmêlements du câble d'alimentation.

De telles dispositions permettent de faire descendre le câble d'alimentation sensiblement verticalement au dessus du robot. Ainsi, le robot ne subit pas d'effort latéral engendré par ledit câble d'alimentation et n'est donc pas gêné pour se déplacer.

Dans des modes particuliers de réalisation de l'invention, ledit câble d'alimentation peut comporter en outre l'une ou plusieurs des caractéristiques suivantes, prises isolément ou selon toutes les combinaisons techniquement possibles.

Suivant une caractéristique avantageuse de l'invention, une partie supérieure dudit moyen de flottaison est une calotte lisse et convexe. Ladite forme de ladite partie supérieure dudit moyen de flottaison permet d'aider le moyen de flottaison à glisser plus facilement sous une couverture d'une piscine comme par exemple sous une bâche de piscine. Dans des modes de réalisation particuliers, ladite calotte est conformée pour glisser sous une couverture de piscine sous l'effet d'une traction exercée par le robot de nettoyage de piscine sur le moyen de flottaison par l'intermédiaire du câble d'alimentation.

Dans des modes particuliers de réalisation de l'invention, ledit câble d'alimentation comporte une excroissance supportée par ledit moyen de flottaison. On entend par excroissance, une protubérance apparaissant à la surface de quelque chose, ici à la surface dudit moyen de flottaison.

Dans un exemple préféré de réalisation de l'invention, ladite excroissance est située au-dessus dudit moyen de flottaison. De préférence, ladite excroissance est extractible dudit moyen de flottaison. L'extraction de ladite excroissance est préférentiellement avantageuse lorsque la piscine est recouverte d'une couverture comme une bâche ou un rideau. Préférentiellement, ladite excroissance est située hors de l'eau de ladite piscine.

Dans un mode de réalisation préféré de l'invention, ledit câble d'alimentation comporte deux connecteurs tournants situés perpendiculairement l'un par rapport à l'autre.

Le positionnement desdits deux connecteurs tournants perpendiculairement l'un par rapport à l'autre permet à chacun des câbles sortant de chaque connecteur tournant de réaliser des mouvements sans agir sur le câble de l'autre connecteur tournant.

Suivant une caractéristique avantageuse de l'invention, ledit câble d'alimentation est rigide en torsion.

Dans un exemple préféré de réalisation de l'invention, ledit connecteur tournant est relié par une liaison rotule à doigt audit moyen de flottaison. Une telle liaison permet que le connecteur tournant puisse tourner selon deux axes de rotation. La rotation dudit connecteur tournant selon un axe transversal dudit connecteur tournant n'est pas permise. Ladite liaison rotule à doigt permet de maintenir ledit moyen de flottaison selon un plan sensiblement parallèle au plan de la ligne d'eau, ce qui empêche ledit moyen de flottaison de passer sous ledit câble d'alimentation.

### PRÉSENTATION DES FIGURES

L'invention sera mieux comprise à la lecture de la description suivante, donnée à titre d'exemple nullement limitatif, et faite en se référant aux figures 1 à 3 qui représentent :
- Figure 1 : vue d'un exemple d'un câble d'alimentation d'un robot de nettoyage de piscine selon l'invention utilisé sous une couverture d'une piscine.
- Figure 2 : autre vue de l'exemple de la figure 1 du câble d'alimentation selon l'invention utilisé sous une couverture d'une piscine.
- Figure 3 : vue d'un exemple d'un câble d'alimentation selon l'invention utilisé dans une piscine sans couverture de ladite piscine.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION DE L'INVENTION

Un exemple de réalisation non limitatif de l'invention est à présent décrit de manière détaillée dans une application au cas d'un câble d'alimentation d'un robot de nettoyage de piscine.

Le robot (non représenté sur les figures) de nettoyage de piscine est immergé dans une surface formée par des parois d'un bassin comme par exemple par des parois d'une piscine.

Le robot est commandé par un dispositif de commande (non représenté sur les figures) qui est situé hors de l'eau. Le dispositif de commande est relié par un premier câble d'alimentation 10 à un connecteur tournant 20. Le premier câble d'alimentation 10 est flottant et est situé en surface 60 de la piscine. Le connecteur tournant 20 est relié par un deuxième câble d'alimentation 70 au robot de nettoyage de piscine. Le deuxième câble d'alimentation 70 est préférentiellement relativement court par rapport au premier câble d'alimentation 10 afin que le deuxième câble d'alimentation 70 ne créé pas d'emmêlements en faisant tourner le robot. Dans un exemple de réalisation de l'invention dans lequel la piscine présente une profondeur de 3 m, le premier câble d'alimentation 10 comporte une longueur comprise entre 10 m et 15 m et le deuxième câble d'alimentation comporte une longueur de 3,5 m. Dans un exemple préféré de réalisation de l'invention, le deuxième câble d'alimentation 70 est relativement rigide et est difficilement tordu.

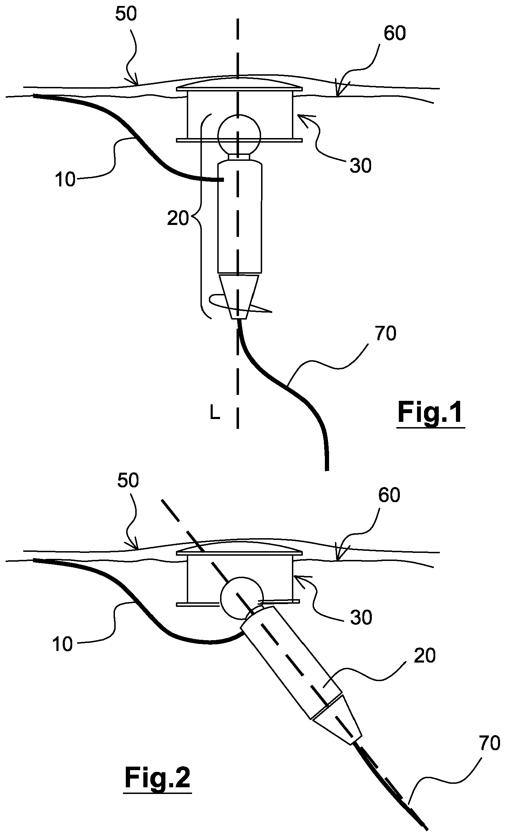

Le connecteur tournant 20 comporte une partie fixe et une partie apte à être mobile en rotation autour d'un axe longitudinal du connecteur tournant 20. Dans l'exemple préféré de réalisation de la figure 1, la partie fixe est située en partie supérieure du connecteur tournant 20 et la partie mobile en partie inférieure du connecteur tournant 20. Ce placement des parties fixes et mobiles du connecteur tournant 20 illustre les conditions normales d'utilisation du connecteur tournant 20.

Dans l'exemple de la figure 1, le premier câble d'alimentation 10 est relié au connecteur tournant 20 au niveau de la partie fixe du connecteur tournant 20. Plus précisément, le premier câble d'alimentation 10 est relié au connecteur tournant 20 au niveau d'une partie latérale du connecteur tournant 20.

Dans une forme préférée de réalisation de l'invention illustrée en figure 1, le deuxième câble d'alimentation 70 est relié au connecteur tournant 20 au niveau de la partie mobile. Plus précisément, le deuxième câble d'alimentation 70 est relié au connecteur tournant 20 par une partie inférieure du connecteur tournant 20.

La figure 1 illustre un exemple d'un premier câble d'alimentation 10 utilisable sous une couverture 50 flottante d'un bassin d'une piscine. La couverture 50 flottante du bassin de piscine peut être par exemple une bâche à bulles ou un rideau.

Le premier câble d'alimentation 10 comporte un moyen de flottaison 30. Dans l'exemple de la figure 1, le moyen de flottaison 30 présente une forme parallélépipédique, mais d'autres formes peuvent convenir. Le moyen de flottaison 30 comporte un matériau permettant la flottaison du moyen de flottaison 30. Dans un exemple préféré de réalisation de l'invention, le moyen de flottaison 30 est notamment réalisé en polystyrène expansé. Le polystyrène expansé présente une densité comprise entre 15 kg/m³ et 25 kg/m³ permettant avantageusement au moyen de flottaison 30 de flotter. Dans une forme de réalisation de l'invention, le connecteur tournant 20 est relié au moyen de flottaison 30 au niveau de la partie fixe du connecteur tournant 20. Grâce au moyen de flottaison 30, dans les conditions normales d'utilisation du connecteur tournant 20 et lorsque le robot ne tire pas sur le deuxième câble d'alimentation 70, le connecteur tournant 20 présente une position sensiblement perpendiculaire par rapport à la surface 60 de la piscine.

Dans une forme préférée de réalisation de l'invention, le moyen de flottaison 30 comporte au niveau de la partie supérieure, une calotte. Dans des modes de réalisation, ladite calotte est conformée pour glisser sous une couverture de piscine sous l'effet d'une traction exercée par le robot de nettoyage de piscine sur le moyen de flottaison 30 par l'intermédiaire du câble d'alimentation 70. Dans un mode de réalisation de l'invention, le robot de nettoyage de piscine présente une puissance absorbée de 150 watt pour sa pompe et ses moyens de déplacement. Cette valeur est donnée à titre illustratif et non limitatif.

Dans des modes de réalisation ladite calotte est lisse et convexe. Ainsi, la calotte permet avantageusement d'aider à la glisse du moyen de flottaison 30 sous la couverture 50 de la piscine. Dans un exemple préféré de réalisation de l'invention, la calotte lisse et convexe est extractible du moyen de flottaison 30. Dans des modes de réalisation la calotte affleure à la surface de l'eau par ses bords. On entend par bords de la calotte, l'arrête du tour de la calotte. Dans des modes de réalisation les bords de la calotte sont à une distance de la surface de l'eau inférieure ou égale à 2 cm. Avantageusement la calotte n'est pas hémisphérique. Dans des modes de réalisation la calotte possède un angle inférieur à 45° par rapport à l'horizontal.

La hauteur de la calotte, selon des modes de réalisations particuliers, est inférieure ou égale à 5 cm par rapport au plan formé par ses bords, de préférence inférieure ou égale à 3 cm, encore préférentiellement inférieure ou égale à 2,5 cm. Plus la calotte est de hauteur faible, moins de résistance au glissement lui sera imposée par une couverture 50 de piscine la recouvrant.

Il existe différents types de couverture 50 de piscine, par exemple les couvertures 50 de type rigide et les couvertures 50 de type souple. Un exemple de couvertures 50 souple de piscine est la couverture à bulles plus connue sous la dénomination bâche à bulles. La calotte du moyen de flottaison 30 est généralement de hauteur plus petite (par exemple comprise entre 0,5 cm et 1,5 cm) lors de l'utilisation de la présente invention sous une couverture 50 rigide de piscine, comparée à une utilisation sous une couverture 50 souple de piscine dans laquelle la calotte peut être d'une hauteur plus grande (par exemple supérieure ou égale à 2 cm). Cela s'explique notamment par le fait qu'une couverture 50 rigide de piscine exerce généralement une plus grande résistance au glissement de la calotte qu'elle recouvre par rapport à une couverture 50 souple de piscine pour une même hauteur de calotte.

Dans un mode de réalisation préféré de l'invention, le connecteur tournant 20 comporte une rotule située au niveau de la partie supérieure dudit connecteur tournant 20. Plus précisément, la rotule est située au dessus de la partie fixe dudit connecteur tournant 20 lorsque le connecteur tournant 20 est utilisé dans les conditions normales d'utilisation et lorsque le robot n'exerce pas une traction sur le deuxième câble d'alimentation 70, soit lorsque le connecteur tournant 20 est sensiblement perpendiculaire à la surface 60 de la piscine.

La rotule du connecteur tournant 20 est apte à s'insérer dans le moyen de flottaison 30.

La liaison entre le connecteur tournant 20 et le moyen de flottaison 30 est une liaison rotule à doigt. Cette liaison rotule à doigt permet la rotation du connecteur tournant 20 autour de deux axes. Cette liaison rotule à doigt permet la rotation du connecteur tournant 20 autour de l'axe longitudinal « L » du connecteur tournant 20. La rotation du connecteur tournant 20 est représentée en figure 1. Par contre, la liaison rotule à doigt ne permet pas la rotation du connecteur tournant 20 autour d'un axe transversal du connecteur tournant 20.

La figure 2 représente le premier câble d'alimentation 10 de la figure 1 dans lequel le robot ayant effectué un déplacement, a modifié la position du connecteur tournant 20. En effet, le connecteur tournant 20 de la figure 2 présente un angle d'environ 45 degrés par rapport à l'axe du connecteur tournant 20 de la figure 1.

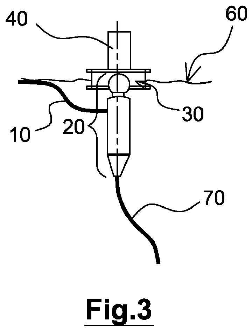

La figure 3 représente un exemple d'un câble d'alimentation utilisable sans une couverture 50 d'un bassin de piscine.

Le dispositif objet de l'invention comporte une excroissance 40 lorsque la piscine ne comporte pas de couverture 50 du bassin de la piscine. Dans un exemple de réalisation de l'invention, l'excroissance 40 est un tube creux de 4 cm de diamètre et de 12 cm de hauteur. Dans un exemple préféré de réalisation de l'invention, l'excroissance 40 est réalisée en au moins un matériau permettant une flottaison de l'excroissance 40. De préférence, au moins un matériau utilisé pour fabriquer l'excroissance 40 est du polystyrène expansé. Dans un exemple préféré de réalisation de l'invention, le moyen de flottaison 30 ne comporte pas en partie supérieure une calotte lisse et convexe. Le moyen de flottaison 30 est relié de préférence en partie supérieure à l'excroissance 40. Dans l'exemple de la figure 3, l'excroissance 40 est située en dehors de l'eau. Dans un exemple préféré de réalisation de l'invention, l'excroissance 40 est extractible du moyen de flottaison 30, permettant ainsi d'utiliser le câble d'alimentation objet de l'invention avec et sans couverture 50 du bassin de la piscine.

L'excroissance 40 permet d'améliorer les effets du moyen de flottaison 30 qui permettent d'empêcher le robot de passer sous le premier câble d'alimentation 10, et donc de l'empêcher de créer des emmêlements comme des boucles autour du premier câble d'alimentation 10.

La description ci-avant illustre clairement que par ses différentes caractéristiques et leurs avantages, la présente invention atteint les objectifs qu'elle s'était fixés. En particulier, l'ajout d'un moyen de flottaison au premier câble d'alimentation 10 permet de conserver une efficacité maximale du robot et de préserver dans le temps le premier câble d'alimentation 10. Grâce au moyen de flottaison 30 et/ou à l'excroissance 40, le premier câble d'alimentation 10 ne comporte plus d'emmêlements, alors que sans moyen de flottaison 30 et/ou sans excroissance 40, le premier câble d'alimentation 10 comporte au moins 3 à 5 emmêlements pendant un temps de fonctionnement du robot de nettoyage de piscine d'environ 3 heures.

## Revendications

1. Câble d'alimentation (10) pour un robot de nettoyage de piscine, ledit câble d'alimentation (10) comportant un connecteur tournant (20) ainsi qu'un moyen de flottaison (30) supportant ledit connecteur tournant (20), **caractérisé en ce qu'**une partie supérieure dudit moyen de flottaison (30) est une calotte étant conformée pour glisser sous une couverture (50) de piscine sous l'effet d'une traction exercée par le robot de nettoyage de piscine sur le moyen de flottaison (30) par l'intermédiaire du câble d'alimentation (70).

2. Câble d'alimentation (10) selon la revendication 1, comportant une excroissance (40) supportée par ledit moyen de flottaison (30).

3. Câble d'alimentation (10) selon la revendication 2, dans lequel ladite excroissance (40) est extractible dudit moyen de flottaison (30).

4. Câble d'alimentation (10) selon l'une quelconque des revendications précédentes, comportant deux connecteurs tournants (20) situés perpendiculairement l'un par rapport à l'autre.

5. Câble d'alimentation (10) selon l'une quelconque des revendications précédentes, dans lequel ledit câble d'alimentation (10) est rigide en torsion.

6. Câble d'alimentation (10) selon l'une quelconque des revendications précédentes, dans lequel ledit connecteur tournant (20) est relié par une liaison rotule à doigt audit moyen de flottaison (30).

## Patentansprüche

1. Stromkabel (10) für einen Schwimmbeckenreinigungsroboter, wobei das Stromkabel (10) einen Drehstecker (20) sowie ein Schwimmmittel (30) umfasst, welches den Drehstecker (20) trägt, **dadurch gekennzeichnet, dass** ein oberer Teil des Schwimmmittels (30) eine Glocke ist, welche dafür angepasst ist, unter einer Schwimmbeckenabdeckung (50) unter der Einwirkung eines durch den Schwimmbeckenreinigungsroboter ausgeübten Zugs auf das Schwimmmittel (30) mittels des Stromkabels (70) zu gleiten.

2. Stromkabel (10) nach Anspruch 1, umfassend eine Ausstülpung (40), welche von dem Schwimmmittel (30) getragen wird.

3. Stromkabel (10) nach Anspruch 2, bei welchem die Ausstülpung (40) aus dem Schwimmmittel (30) ausziehbar ist.

4. Stromkabel (10) nach einem der vorhergehenden Ansprüche, umfassend zwei Drehstecker (20), welche senkrecht zueinander angeordnet sind.

5. Stromkabel (10) nach einem der vorhergehenden Ansprüche, bei dem das Stromkabel (10) torsionssteif ist.

6. Stromkabel (10) nach einem der vorhergehenden Ansprüche, bei dem der Drehstecker (20) durch eine Kugelkopfverbindung mit Finger mit dem Schwimmmittel (30) verbunden ist.

## Claims

1. Power lead (10) for a swimming pool cleaning robot, said power lead (10) comprising a rotary connector (20) and a buoyancy means (30) supporting said rotary connector (20), **characterized in that** an upper part of said buoyancy means (30) is a cap shaped to slide under a swimming pool cover (50) under the effect of a traction exerted by the swimming pool cleaning robot on the buoyancy means (30) through the power lead (70).

2. Power lead (10) according to Claim 1, comprising a projection (40) supported by said buoyancy means (30).

3. Power lead (10) according to Claim 2, wherein said projection (40) can be extracted from said buoyancy means (30).

4. Power lead (10) according to any one of the preceding claims, comprising two rotary connectors (20) situated at right angles to one another.

5. Power lead (10) according to any one of the preceding claims, wherein said power lead (10) is torsionally rigid.

6. Power lead (10) according to any one of the preceding claims, wherein said rotary connector (20) is connected to the said buoyancy means (30) by a 2-DoF (Degrees of Freedom) ball joint.
